# FASCICULE DE BREVET EUROPEEN

(11) **EP 3 453 949 B1**
(45) Date de publication et mention de la délivrance du brevet: **15.04.2020**
(21) Numéro de dépôt: 18191880.6
(22) Date de dépôt: 31.08.2018
(51) Int. Cl.: F21S 41/29, F21S 41/55, F21S 41/20

(54) **BLOC OPTIQUE DE VÉHICULE À ÉCRAN TRANSLUCIDE SUSPENDU À UN MASQUE**
OPTISCHE EINHEIT FÜR FAHRZEUG MIT TRANSLUZENTER ABDECKUNG VON EINER MASKE SUSPENDIERT
VEHICLE OPTICAL UNIT WITH TRANSLUCENT SCREEN SUSPENDED FROM A MASK

(30) Priorité: 12.09.2017 FR 1758398
(43) Date de publication de la demande: 13.03.2019
(73) Titulaire: PSA Automobiles SA, 78300 Poissy (FR)
(72) Inventeur: VIDEIRA, FILIPE, 78140 VELIZY VILLACOUBLAY (FR)

(56) Documents cités:
- EP-A1- 2 045 518
- EP-A1- 2 157 368
- WO-A1-2015/001823

## Description

L'invention concerne les blocs optiques qui équipent des véhicules et qui comprennent un boîtier délimitant avec un écran translucide une cavité comportant notamment un masque.

On entend ici par « bloc optique » un dispositif lumineux assurant au moins une fonction photométrique d'éclairage ou de signalisation. Il pourra s'agir d'un phare ou projecteur avant ou d'un feu avant ou arrière.

Certains blocs optiques de véhicule, généralement de type automobile, comprennent un boîtier qui délimite une cavité dans laquelle est installé un masque auquel est couplé un écran translucide qui ferme cette cavité dans une partie avant.

Ce couplage de l'écran translucide peut se faire soit dans une partie avant du masque, soit dans une partie arrière du masque, généralement par clippage en deux endroits distants afin d'éviter qu'il ne bouge et/ou qu'il ne vibre.

Ce type de couplage pose des problèmes. En effet, le couplage dans la partie avant du masque rend les moyens de couplage visibles par transparence. Quant au couplage dans la partie arrière du masque, il s'avère difficile à réaliser car le technicien qui le réalise ne voit pas les moyens de couplage du masque du fait qu'ils sont masqués.

De plus, dans les deux alternatives précitées, la bonne tenue de l'écran translucide impose que ce dernier soit fixé en deux endroits, ce qui augmente soit le nombre de moyens de couplage visibles et donc nuit à l'esthétique du bloc optique, soit la difficulté du couplage.

Le document EP2157368 divulgue un bloc optique selon le préambule de la revendication 1.

L'invention a donc notamment pour but d'améliorer la situation.

Elle propose notamment à cet effet un bloc optique destiné à équiper un véhicule et comprenant un boîtier délimitant une cavité dans laquelle est installé un masque auquel est couplé dans une partie avant un écran translucide fermant la cavité.

Ce bloc optique se caractérise par le fait :
- que la partie avant de son masque comprend un premier bord périphérique comportant sur une face interne au moins une première protubérance munie d'un premier moyen de couplage, et sur une face externe un deuxième moyen de couplage, et
- que son écran translucide comprend une partie avant comportant un second bord périphérique, d'une part, auquel est solidarisé au moins un premier bras orienté vers l'arrière et prolongé par un deuxième bras faisant face au second bord périphérique et comportant un troisième moyen de couplage coopérant avec le premier moyen de couplage pour induire une immobilisation arrière de l'écran translucide par rapport au masque, et, d'autre part, comprenant un quatrième moyen de couplage coopérant avec le deuxième moyen de couplage pour induire une immobilisation avant de l'écran translucide par rapport au masque.

Cette double immobilisation vers l'avant et vers l'arrière assure un couplage efficace de l'écran translucide au masque en au moins deux endroits, légèrement distants mais situés dans une même zone, invisible de l'extérieur du bloc optique, y compris par transparence.

Le bloc optique selon l'invention peut comporter d'autres caractéristiques qui peuvent être prises séparément ou en combinaison, et notamment :
- le premier bord périphérique peut être situé dans une partie supérieure de la partie avant du masque. Dans ce cas, le second bord périphérique est situé dans une partie supérieure de l'écran translucide ;
- le premier bord périphérique peut comporter sur sa face interne deux premières protubérances munies chacune d'un premier moyen de couplage. Dans ce cas, le deuxième bras comporte deux troisièmes moyens de couplage coopérant respectivement avec les premiers moyens de couplage pour induire l'immobilisation arrière de l'écran translucide par rapport au masque ;
- chaque première protubérance peut comprendre un premier logement ouvert présentant une forme concave et définissant un premier moyen de couplage. Dans ce cas, chaque troisième moyen de couplage est défini par une portion du deuxième bras qui présente une forme convexe adaptée étroitement à cette forme concave pour la loger ;
- le premier bord périphérique peut comprendre sur sa face externe un second logement ouvert définissant le deuxième moyen de couplage. Dans ce cas, le second bord périphérique comprend une deuxième protubérance définissant le quatrième moyen de couplage et logée dans le second logement ouvert. En variante, le second bord périphérique peut comprendre un second logement ouvert définissant le quatrième moyen de couplage. Dans cette variante, le premier bord périphérique comprend sur sa face externe une deuxième protubérance définissant le deuxième moyen de couplage et logée dans le second logement ouvert ;
- le premier bord périphérique peut comprendre sur sa face interne au moins une troisième protubérance présentant une première face en pente orientée vers la face interne, et le deuxième bras peut comprendre au moins une quatrième protubérance munie d'une seconde face en pente s'appuyant sur cette première face en pente pour interdire une rotation de l'écran translucide par rapport au masque ;
   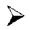 le premier bord périphérique peut comprendre sur sa face interne deux troisièmes protubérances présentant chacune une première face en pente orientée vers la face interne. Dans ce cas, le deuxième bras comprend deux quatrièmes protubérances munies chacune d'une seconde face en pente s'appuyant sur l'une des premières faces en pente pour interdire une rotation de l'écran translucide par rapport au masque ;
   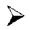 chaque troisième protubérance peut être solidaire d'une première protubérance.

L'invention propose également un véhicule, éventuellement de type automobile, et comprenant au moins un bloc optique du type de celui présenté ci-avant.

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où le caractère apparemment discontinu de certaines lignes), sur lesquels :
- la figure 1 illustre schématiquement, dans une vue en perspective du côté de la face avant de l'écran translucide, une partie d'un exemple de réalisation d'un bloc optique selon l'invention avant son installation dans un véhicule,
- la figure 2 illustre schématiquement, dans une vue en perspective du côté de la face arrière de l'écran translucide, une partie du bloc optique de la figure 1,
- la figure 3 illustre schématiquement, dans une vue en perspective, une partie supérieure de l'écran translucide du bloc optique des figures 1 et 2,
- la figure 4 illustre schématiquement, dans une vue en perspective, une partie avant supérieure du masque du bloc optique des figures 1 et 2,
- la figure 5 illustre schématiquement, dans une autre vue en perspective, la partie supérieure de l'écran translucide du bloc optique des figures 1 et 2,
- la figure 6 illustre schématiquement, dans une autre vue en perspective, la partie avant supérieure du masque du bloc optique des figures 1 et 2, et
- la figure 7 illustre schématiquement, dans une vue en perspective et en coupe, l'assemblage final de la partie supérieure de l'écran translucide et de la partie avant supérieure du masque du bloc optique des figures 1 et 2.

L'invention a notamment pour but de proposer un bloc optique BO destiné à équiper un véhicule et comprenant un écran translucide ET solidarisé à un masque MB sans que cela ne se voit de l'extérieur.

Il est rappelé que l'on entend ici par « bloc optique » un dispositif lumineux comprenant un boîtier BB délimitant avec un écran translucide ET une cavité CB comportant un masque MB et au moins une source de photons participant à au moins une fonction photométrique d'éclairage ou de signalisation.

On considère dans ce qui suit, à titre d'exemple non limitatif, que le véhicule est de type automobile. Il s'agit, par exemple, d'une voiture. Mais l'invention n'est pas limitée à ce type de véhicule. En effet, elle concerne tout véhicule (terrestre, maritime (ou fluvial), ou aérien), dès lors qu'il doit comprendre au moins un bloc optique.

Par ailleurs, on considère dans ce qui suit, à titre d'exemple non limitatif, que le bloc optique BO est un feu arrière. Mais il pourrait également s'agir d'un projecteur (ou phare) avant. A titre d'exemple ce bloc optique BO assure au moins une fonction photométrique de type feu de stop, mais il pourrait assurer n'importe quelle autre fonction photométrique (au moins de signalisation).

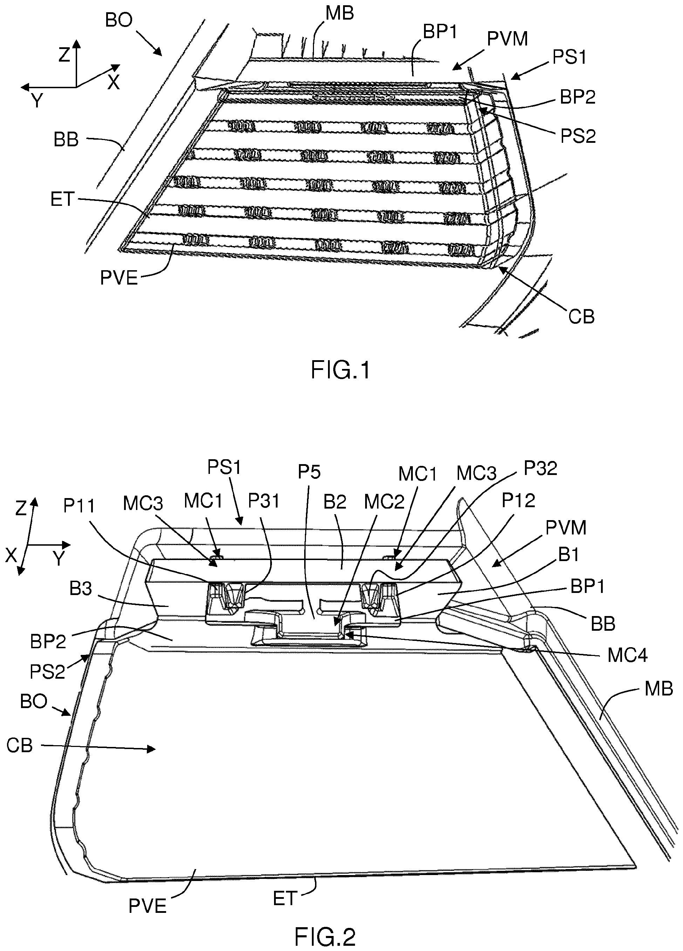

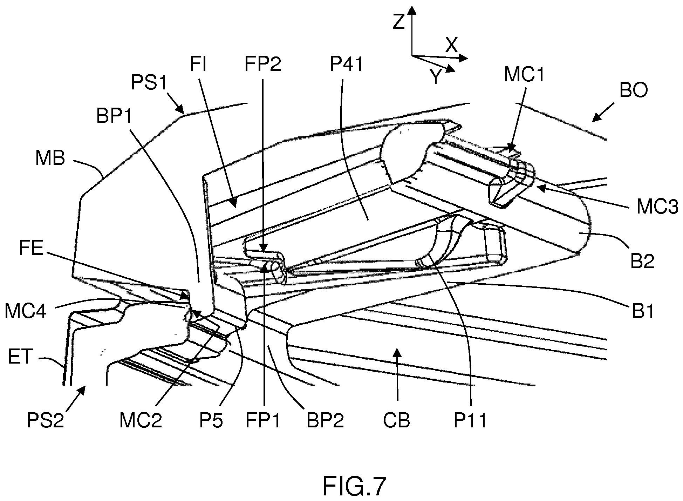

Sur les figures 1 à 7, la direction X est une direction dite longitudinale du fait qu'elle est destinée à être parallèle à un côté longitudinal d'un véhicule, la direction Y est une direction dite transversale du fait qu'elle est destinée à être perpendiculaire aux côtés longitudinaux de ce véhicule et donc perpendiculaire à la direction longitudinale X, et la direction Z est une direction verticale, perpendiculaire aux directions longitudinale X et transversale Y.

On a schématiquement illustré sur les figures 1 et 2 une partie d'un exemple de réalisation d'un bloc optique BO selon l'invention, avant son installation dans un véhicule.

Comme illustré partiellement sur les figures 1 et 2, un bloc optique BO, selon l'invention, comprend un boîtier BB, un écran translucide ET, un masque MB, et au moins une source de photons (avec d'éventuels autres éléments optiques) participant à au moins une fonction photométrique.

Le boîtier BB est réalisé par moulage d'un matériau opaque et rigide, comme par exemple une matière plastique ou synthétique.

L'écran translucide ET est réalisé dans un matériau translucide, ayant une couleur adaptée à la fonction photométrique à assurer (par exemple rouge, orange, ou cristal), et rigide, comme par exemple une matière plastique ou synthétique. Dans ce cas, il peut être réalisé par moulage.

Le boîtier BB délimite une cavité CB logeant le masque MB et chaque source de photons et chaque éventuel autre élément optique participant à la fonction photométrique de son bloc optique BO, et l'écran translucide ET ferme cette cavité CB du côté d'une partie avant.

Les notions d'avant et d'arrière doivent ici se comprendre par rapport au sens de propagation des photons utiles, c'est-à-dire qui participent à une fonction photométrique et donc qui sortent du véhicule par l'écran translucide ET du bloc optique BO en se propageant de la partie arrière de ce dernier (BO) vers sa partie avant.

Comme illustré non limitativement sur les figures 1 et 2, le masque MB comprend une partie avant PVM à laquelle est couplé l'écran translucide ET et qui comprend un premier bord périphérique BP1 ayant une face interne orientée vers la cavité CB (et donc la partie arrière du boîtier BB) et une face externe FE orientée vers l'extérieur. Comme cela apparaît mieux sur les figures 2, 4, 6 et 7, ce premier bord périphérique BP1 comporte sur sa face interne FI au moins une première protubérance P1j munie d'un premier moyen de couplage MC1, et sur sa face externe FE un deuxième moyen de couplage MC2.

L'écran translucide ET comprend une partie avant PVE comportant un second bord périphérique BP2 auquel est solidarisé au moins un premier bras B1 qui est orienté vers l'arrière du boîtier BB et qui est prolongé par un deuxième bras B2 faisant face au second bord périphérique BP2 et comportant un troisième moyen de couplage MC3 coopérant avec le (un) premier moyen de couplage MC1 (correspondant) du masque MB pour induire une immobilisation arrière de l'écran translucide ET par rapport au masque MB. De plus, ce second bord périphérique BP2 comprend un quatrième moyen de couplage MC4 coopérant avec le deuxième moyen de couplage MC2 du masque MB pour induire une immobilisation avant de l'écran translucide ET par rapport au masque MB.

Grâce à cette double immobilisation vers l'avant et vers l'arrière, l'écran translucide ET est efficacement couplé (et solidarisé) au masque MB en au moins deux endroits, légèrement distants mais situés dans une même zone, invisible de l'extérieur du bloc optique BO (du côté de sa face avant), y compris par transparence. On comprendra que cette double immobilisation empêche l'écran translucide ET de se déplacer, au moins selon la direction longitudinale X, par rapport au masque MB.

On notera que dans l'exemple illustré non limitativement sur les figures 2, 3 et 5, un troisième bras B3 assure également la solidarisation du deuxième bras B2 au second bord périphérique BP2, afin de renforcer l'ensemble et d'augmenter la stabilité de l'écran translucide ET par rapport au masque MB. Mais on pourrait se passer d'un tel troisième bras B3.

On notera également que dans l'exemple illustré non limitativement sur les figures 2 à 7, le deuxième bras B2 est sensiblement parallèle au second bord périphérique BP2, et les premier B1 et troisième B3 bras sont sensiblement perpendiculaires au second bord périphérique BP2. Mais d'autres formes peuvent être envisagées. Ainsi, le deuxième bras B2 pourrait prolonger les premier B1 et troisième B3 de façon non anguleuse, c'est-à-dire selon une courbure continue.

On notera également que dans l'exemple illustré non limitativement sur les figures 1 à 7 le premier bord périphérique BP1 est situé dans une partie supérieure PS1 de la partie avant PVM du masque MB, et le second bord périphérique BP2 est situé dans une partie supérieure PS2 de l'écran translucide ET. Ainsi, on a l'impression que l'écran translucide ET est suspendu au masque MB. Mais dans une variante de réalisation le premier bord périphérique BP1 pourrait être situé dans une partie inférieure de la partie avant PVM du masque MB, et le second bord périphérique BP2 pourrait être situé dans une partie inférieure de l'écran translucide ET.

On notera également que dans l'exemple illustré non limitativement sur les figures 1 à 7 le premier bord périphérique BP1 du masque MB comporte sur sa face interne FI deux premières protubérances P1j (j = 1 ou 2) munies chacune d'un premier moyen de couplage MC1. Dans ce cas, le deuxième bras B2 comporte deux troisièmes moyens de couplage MC3 qui coopèrent respectivement avec les deux premiers moyens de couplage MC1 pour induire l'immobilisation arrière de l'écran translucide ET par rapport au masque MB. Cela permet d'améliorer l'immobilisation arrière et d'augmenter la stabilité de l'écran translucide ET par rapport au masque MB, notamment suivant la direction transversale Y (en particulier lorsque les deux troisièmes moyens de couplage MC3 sont placés sensiblement à égale distance du plan médian de l'écran translucide ET comme dans l'exemple illustré).

Mais dans une variante de réalisation le premier bord périphérique BP1 pourrait ne comporter sur sa face interne FI qu'une seule première protubérance P1j, et le deuxième bras B2 pourrait ne comporter qu'un seul troisième moyen de couplage MC3.

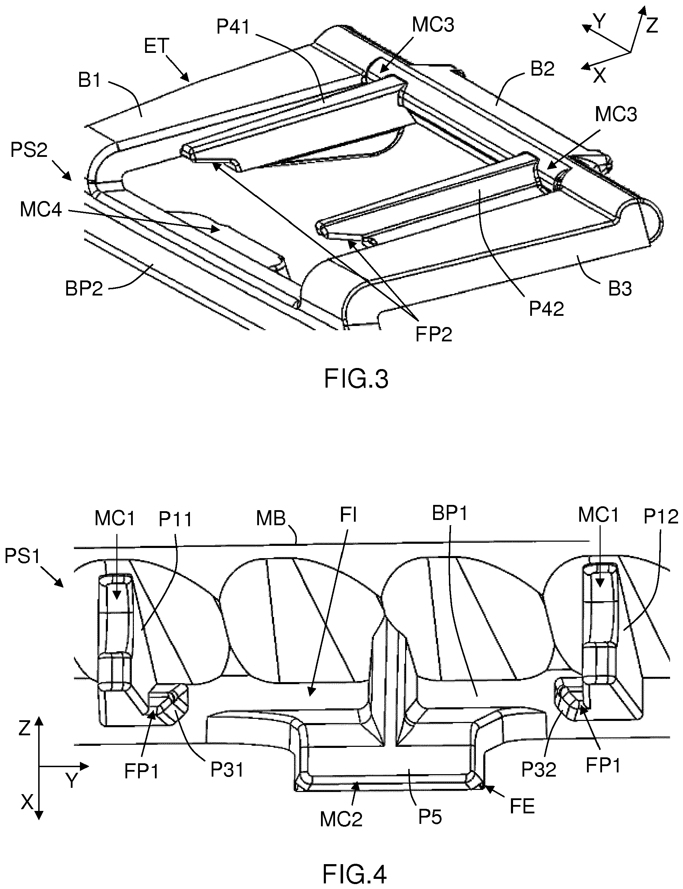

Par exemple, et comme illustré non limitativement sur les figures 4, 6 et 7, chaque première protubérance P1j peut comprendre un premier logement ouvert qui présente une forme concave et qui définit un premier moyen de couplage MC1. Dans ce cas, chaque troisième moyen de couplage MC3 peut être défini par une portion du deuxième bras B2 qui présente une forme convexe adaptée étroitement à cette forme concave afin d'être logée dans le premier logement ouvert MC1 correspondant. En d'autres termes, dans cet exemple de réalisation au moins une portion MC3 du deuxième bras B2 est logée partiellement et étroitement dans le premier logement ouvert MC1 d'une première protubérance P1j correspondante.

Ici, le premier logement ouvert MC1 de chaque protubérance P1j est défini dans l'extrémité libre de cette dernière (P1j).

Par exemple, et comme illustré non limitativement, la forme concave peut être semi-cylindrique circulaire (en creux), et chaque portion MC3 du deuxième bras B2 peut être semi-cylindrique circulaire. Mais d'autres formes concave et convexe pouvant coopérer entre elles afin d'assurer l'immobilisation arrière peuvent être utilisées.

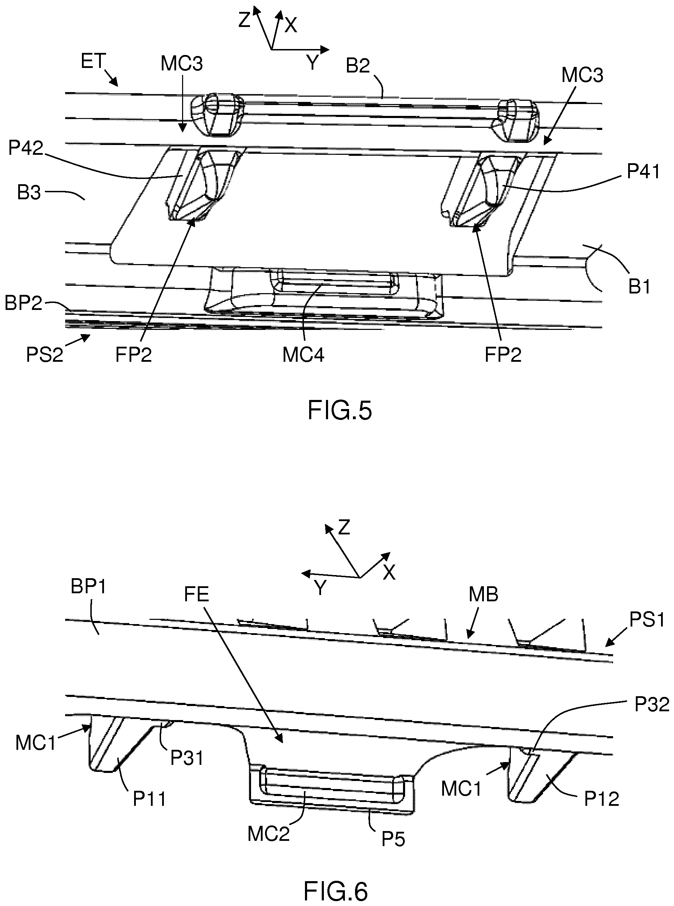

Egalement par exemple, et comme illustré non limitativement sur les figures 5 à 7, le premier bord périphérique BP1 du masque MB peut comprendre sur sa face externe FE un second logement ouvert qui définit le deuxième moyen de couplage MC2. Dans ce cas, le second bord périphérique BP2 comprend une deuxième protubérance qui définit le quatrième moyen de couplage MC4 et qui est logée dans le second logement ouvert MC2. Cela permet d'avoir une immobilisation avant qui empêche l'écran translucide ET de se déplacer par rapport au masque MB non seulement selon la direction longitudinale X mais également selon la direction transversale Y.

Le second logement ouvert MC2 et la deuxième protubérance MC4 peuvent présenter différentes formes, respectivement concave et convexe, dès lors que leur coopération permet d'assurer l'immobilisation avant.

On notera que dans l'exemple illustré non limitativement sur les figures 5 à 7, le second logement ouvert MC2 est défini dans une cinquième protubérance P5 saillant du premier bord périphérique BP1 et son centre est placé dans le plan médian de l'écran translucide ET afin d'augmenter la stabilité de l'écran translucide ET par rapport au masque MB. Mais il pourrait être directement défini dans le premier bord périphérique BP1 (c'est-à-dire sans être légèrement déporté).

Dans une variante de réalisation non représentée, on peut avoir la situation inverse de celle décrite dans les trois paragraphes précédents et illustrée sur les figures 5 à 7. Plus précisément, dans cette variante c'est le second bord périphérique BP2 qui comprend un second logement ouvert définissant le quatrième moyen de couplage MC4, tandis que c'est le premier bord périphérique BP1 qui comprend sur sa face externe FE une deuxième protubérance définissant le deuxième moyen de couplage MC2 et logée dans le second logement ouvert MC4.

On notera également, comme illustré non limitativement sur les figures 3, 4 et 7, que le premier bord périphérique BP1 peut aussi comprendre sur sa face interne FI au moins une troisième protubérance P3k présentant une première face en pente FP1 orientée vers cette face interne FI. Dans ce cas, le deuxième bras B2 comprend au moins une quatrième protubérance P4k munie d'une seconde face en pente FP2 qui s'appuie sur cette première face en pente FP1 pour interdire la rotation de l'écran translucide ET par rapport au masque MB (fonction d'anti-rotation) une fois que les immobilisations avant et arrière sont effectives.

Dans l'exemple illustré non limitativement sur les figures 3, 4, 6 et 7, le premier bord périphérique BP1 comprend sur sa face interne FI deux troisièmes protubérances P3k (k = 1 ou 2) qui présentent chacune une première face en pente FP1 orientée vers cette face interne FI, et le deuxième bras B2 comprend deux quatrièmes protubérances P4k munies chacune d'une seconde face en pente FP2 s'appuyant sur l'une des deux premières faces en pente FP1 pour interdire la rotation de l'écran translucide ET par rapport au masque MB. Cela permet d'améliorer encore plus la stabilité de l'écran translucide ET par rapport au masque MB, notamment dans le plan YZ (en particulier lorsque les deux paires de troisième P3k et quatrième P4k protubérances sont placées sensiblement à égale distance du plan médian de l'écran translucide ET comme dans l'exemple illustré).

Mais on pourrait ne prévoir qu'une seule troisième protubérance P3k et qu'une seule quatrième protubérance P4k.

On notera également, comme illustré non limitativement sur les figures 3, 4, 6 et 7, que chaque troisième protubérance P3k peut être éventuellement solidaire d'une première protubérance P1j. Cela permet de les renforcer mutuellement (et donc de supporter des contraintes plus importantes), mais également de simplifier le moule dans lequel est réalisé le masque MB. Mais dans une variante elles pourraient être séparées.

Pour coupler l'écran translucide ET au masque MB, on peut procéder comme indiqué ci-après. On rapproche l'écran translucide ET de la partie avant PVM du masque MB, puis on translate le second bord périphérique BP2 de l'écran translucide ET vers le fond du boîtier BB jusqu'à ce que le deuxième bras B2 se retrouve situé derrière les premiers moyens de couplage MC1 des premières protubérances P1j. Ensuite, on translate le second bord périphérique BP2 de l'écran translucide ET vers l'avant du boîtier BB afin de coupler ses troisièmes moyens de couplage MC3 aux premiers moyens de couplage MC1. Puis, on entraîne légèrement en rotation l'écran translucide ET par rapport au masque MB afin de coupler son quatrième moyen de couplage MC4 au deuxième moyen de couplage MC2 et dans le même temps provoquer l'appui de ses éventuelles secondes faces en pente FP2 sensiblement contre les éventuelles premières faces en pente FP1. On comprendra que lorsque les secondes faces en pente FP2 sont en appui contre les premières faces en pente FP1, on est certain que le quatrième moyen de couplage MC4 coopère avec le deuxième moyen de couplage MC2.

La rotation est permise par la légère souplesse des pièces ET et MB qui permet par ailleurs de ne pas avoir de jeu de montage pouvant engendrer des vibrations dans le véhicule. En fait, cette souplesse des pièces ET et MB permet un montage en force, qui serait très difficile à réaliser si elles étaient rigides (par exemple en métal).

L'invention offre plusieurs avantages, parmi lesquels :
- une qualité perçue élevée du fait que les moyens de couplage sont invisibles de l'extérieur,
- un effet de style du fait que l'écran translucide semble suspendu,
- une absence de bruits parasites du fait de l'immobilisation avant combinée à l'immobilisation arrière, et à l'éventuelle fonction d'anti-rotation.

## Revendications

1. Bloc optique (BO) destiné à équiper un véhicule et comprenant un boîtier (BB) délimitant une cavité (CB) dans laquelle est installé un masque (MB) auquel est couplé dans une partie avant (PVM) un écran translucide (ET) fermant ladite cavité (CB), **caractérisé en ce que** ladite partie avant (PVM) du masque (MB) comprend un premier bord périphérique (BP1) comportant sur une face interne (FI) au moins une première protubérance (P1j) munie d'un premier moyen de couplage (MC1), et sur une face externe (FE) un deuxième moyen de couplage (MC2), et **en ce que** ledit écran translucide (ET) comprend une partie avant (PVE) comportant un second bord périphérique (BP2) i) auquel est solidarisé au moins un premier bras (B1) orienté vers l'arrière et prolongé par un deuxième bras (B2) faisant face audit second bord périphérique (BP2) et comportant un troisième moyen de couplage (MC3) coopérant avec ledit premier moyen de couplage (MC1) pour induire une immobilisation arrière dudit écran translucide (ET) par rapport audit masque (MB), et ii) comprenant un quatrième moyen de couplage (MC4) coopérant avec ledit deuxième moyen de couplage (MC2) pour induire une immobilisation avant dudit écran translucide (ET) par rapport audit masque (MB).

2. Bloc optique selon la revendication 1, **caractérisé en ce que** ledit premier bord périphérique (BP1) est situé dans une partie supérieure (PS1) de ladite partie avant (PVM) du masque (MB), et ledit second bord périphérique (BP2) est situé dans une partie supérieure (PS2) dudit écran translucide (ET).

3. Bloc optique selon la revendication 1 ou 2, **caractérisé en ce que** ledit premier bord périphérique (BP1) comporte sur sa face interne (FI) deux premières protubérances (P1j) munies chacune d'un premier moyen de couplage (MC1), et ledit deuxième bras (B2) comporte deux troisièmes moyens de couplage (MC3) coopérant respectivement avec lesdits premiers moyens de couplage (MC1) pour induire ladite immobilisation arrière de l'écran translucide (ET) par rapport audit masque (MB).

4. Bloc optique selon l'une des revendications 1 à 3, **caractérisé en ce que** chaque première protubérance (P1j) comprend un premier logement ouvert présentant une forme concave et définissant un premier moyen de couplage (MC1), et chaque troisième moyen de couplage (MC3) est défini par une portion dudit deuxième bras (B2) qui présente une forme convexe adaptée étroitement à ladite forme concave pour la loger.

5. Bloc optique selon l'une des revendications 1 à 4, **caractérisé en ce que** ledit premier bord périphérique (BP1) comprend sur sa face externe (FE) un second logement ouvert définissant ledit deuxième moyen de couplage (MC2), et ledit second bord périphérique (BP2) comprend une deuxième protubérance définissant ledit quatrième moyen de couplage (MC4) et logée dans ledit second logement ouvert (MC2).

6. Bloc optique selon l'une des revendications 1 à 4, **caractérisé en ce que** ledit second bord périphérique (BP2) comprend un second logement ouvert définissant ledit quatrième moyen de couplage (MC4), et ledit premier bord périphérique (BP1) comprend sur sa face externe (FE) une deuxième protubérance définissant ledit deuxième moyen de couplage (MC2) et logée dans ledit second logement ouvert (MC4).

7. Bloc optique selon l'une des revendications 1 à 6, **caractérisé en ce que** ledit premier bord périphérique (BP1) comprend sur sa face interne (FI) au moins une troisième protubérance (P3k) présentant une première face en pente (FP1) orientée vers ladite face interne (FI), et ledit deuxième bras (B2) comprend au moins une quatrième protubérance (P4k) munie d'une seconde face en pente (FP2) s'appuyant sur ladite première face en pente (FP1) pour interdire une rotation dudit écran translucide (ET) par rapport audit masque (MB).

8. Bloc optique selon la revendication 7, **caractérisé en ce que** ledit premier bord périphérique (BP1) comprend sur sa face interne (FI) deux troisièmes protubérances (P3k) présentant chacune une première face en pente (FP1) orientée vers ladite face interne (FI), et ledit deuxième bras (B2) comprend deux quatrièmes protubérances (P4k) munies chacune d'une seconde face en pente (FP2) s'appuyant sur l'une desdites premières faces en pente (FP1) pour interdire une rotation dudit écran translucide (ET) par rapport audit masque (MB).

9. Véhicule, **caractérisé en ce qu'**il comprend au moins un bloc optique (BO) selon l'une des revendications précédentes.

10. Véhicule selon la revendication 9, **caractérisé en ce qu'**il est de type automobile.

## Patentansprüche

1. Scheinwerfereinsatz (BO), der dazu bestimmt ist, ein Fahrzeug auszustatten, und der ein Gehäuse (BB) umfasst, das einen Hohlraum (CB) abgrenzt, in dem eine Maske (MB) installiert ist, mit der in einem Vorderteil (PVM) ein durchlässiger Schirm (ET), der den Hohlraum (CB) verschließt, gekoppelt ist, **dadurch gekennzeichnet, dass** der Vorderteil (PVM) der Maske (MB) einen ersten umfänglichen Rand (BP1) umfasst, der auf seiner Innenfläche (FI) mindestens einen ersten Vorsprung (P1j) umfasst, der mit einem ersten Kopplungsmittel (MC1) versehen ist, und auf einer Außenfläche (FE) ein zweites Kopplungsmittel (MC2), und dass der durchlässige Schirm (ET) einen Vorderteil (PVE) umfasst, der einen zweiten umfänglichen Rand (BP2) umfasst, i) mit dem mindestens ein erster Arm (B1) fest verbunden ist, der nach hinten ausgerichtet ist und von einem zweiten Arm (B2), der dem zweiten umfänglichen Rand (BP2) zugewandt ist, verlängert wird, und ein drittes Kopplungsmittel (MC3) umfasst, das mit dem ersten Kopplungsmittel (MC1) zusammenwirkt, um ein hinteres Feststellen des durchlässigen Schirms (ET) in Bezug auf die Maske (MB) zu induzieren, und ii) ein viertes Kopplungsmittel (MC4) umfasst, das mit dem zweiten Kopplungsmittel (MC2) zusammenwirkt, um ein Feststellen vor dem durchlässigen Schirm (ET) in Bezug auf die Maske (MB) zu induzieren.

2. Scheinwerfereinsatz nach Anspruch 1, **dadurch gekennzeichnet, dass** der erste umfängliche Rand (BP1) in einem oberen Teil (PS1) des Vorderteils (PVM) der Maske (MB) liegt, und der zweite umfängliche Rand (BP2) in einem oberen Teil (PS2) des durchlässigen Schirms (ET) liegt.

3. Scheinwerfereinsatz nach Anspruch 1 oder 2, **dadurch gekennzeichnet, dass** der erste umfängliche Rand (BP1) auf seiner Innenfläche (FI) zwei erste Vorsprünge (P1j) umfasst, die jeweils mit einem ersten Kopplungsmittel (MC1) versehen sind, und der zweite Arm (B2) zwei dritte Kopplungsmittel (MC3) umfasst, die jeweils mit den ersten Kopplungsmitteln (MC1) zusammenwirken, um das hintere Feststellen des durchlässigen Schirms (ET) in Bezug auf die Maske (MB) zu induzieren.

4. Scheinwerfersatz nach einem der Ansprüche 1 bis 3, **dadurch gekennzeichnet, dass** jeder erste Vorsprung (P1j) eine erste offene Aufnahme umfasst, die eine konkave Form aufweist und ein erstes Kopplungsmittel (MC1) definiert, und jedes dritte Kopplungsmittel (MC3) durch einen Abschnitt des zweiten Arms (B2) definiert ist, der eine konvexe Form aufweist, die eng an die konkave Form angepasst ist, um sie aufzunehmen.

5. Scheinwerfereinsatz nach einem der Ansprüche 1 bis 4, **dadurch gekennzeichnet, dass** der erste umfängliche Rand (BP1) auf seiner Außenfläche (FE) eine zweite offene Aufnahme umfasst, die das zweite Kopplungsmittel (MC2) definiert, und der zweite umfängliche Rand (BP2) einen zweiten Vorsprung umfasst, der das vierte Kopplungsmittel (MC4) definiert und in der zweiten offenen Aufnahme (MC2) aufgenommen ist.

6. Scheinwerfereinsatz nach einem der Ansprüche 1 bis 4, **dadurch gekennzeichnet, dass** der zweite umfängliche Rand (BP2) eine zweite offene Aufnahme umfasst, die das vierte Kopplungsmittel (MC4) definiert, und der erste umfängliche Rand (BP1) auf seiner Außenfläche (FE) einen zweiten Vorsprung umfasst, der das zweite Kopplungsmittel (MC2) definiert und in der zweiten offenen Aufnahme (MC4) aufgenommen ist.

7. Scheinwerfereinsatz nach einem der Ansprüche 1 bis 6, **dadurch gekennzeichnet, dass** der erste umfängliche Rand (BP1) auf seiner Innenfläche (FI) mindestens einen dritten Vorsprung (P3k) umfasst, der eine erste schräge Fläche (FP1) aufweist, die zu der Innenfläche (FI) ausgerichtet ist, und der zweite Arm (B2) mindestens einen vierten Vorsprung (P4k) umfasst, der mit einer zweiten schrägen Fläche (FP2) versehen ist, die sich auf die erste schräge Fläche (FP1) stützt, um eine Drehung des durchlässigen Schirms (ET) in Bezug auf die Maske (MB) zu untersagen.

8. Scheinwerfereinsatz nach Anspruch 7, **dadurch gekennzeichnet, dass** der erste umfängliche Rand (BP1) auf seiner Innenfläche (FI) zwei dritte Vorsprünge (P3k) umfasst, die jeweils eine erste schräge Fläche (FP1) aufweisen, die zu der Innenfläche (FI) ausgerichtet ist, und der zweite Arm (B2) zwei vierte Vorsprünge (P4k) umfasst, die jeweils mit einer zweiten schrägen Fläche (FP2) versehen sind, die sich auf eine der ersten schrägen Flächen (FP1) stützt, um eine Drehung des durchlässigen Schirms (ET) in Bezug auf die Maske (MB) zu untersagen.

9. Fahrzeug, **dadurch gekennzeichnet, dass** es mindestens einen Scheinwerfersatz (BO) nach einem der vorstehenden Ansprüche umfasst.

10. Fahrzeug nach Anspruch 9, **dadurch gekennzeichnet, dass** es vom Kraftfahrzeugtyp ist.

## Claims

1. Optical unit (BO) intended to equip a vehicle and comprising a box (BB) delimiting a cavity (CB) wherein is installed a mask (MB) to which is coupled in a front portion (PVM), a translucid screen (ET) closing said cavity (CB), **characterised in that** said front portion (PVM) of the mask (MB) comprises a first peripheral edge (BP1) comprising on an inner face (FI), at least one first protrusion (P1j) equipped with a first coupling means (MC1), and on an outer face (FE), a second coupling means (MC2), and **in that** said translucid screen (ET) comprises a front portion (PVE) comprising a second peripheral edge (BP2) i) to which is secured at least one first arm (B1) oriented rearwards and extended by a second arm (B2) facing said second peripheral edge (BP2) and comprising a third coupling means (MC3) engaging with said first coupling means (MC1) to induce a rear immobilisation of said translucid screen (ET) with respect to said mask (MB), and ii) comprising a fourth coupling means (MC4) engaging with said second coupling means (MC2) to induce a front immobilisation of said translucid screen (ET) with respect to said mask (MB).

2. Optical unit according to claim 1, **characterised in that** said first peripheral edge (BP1) is situated in an upper portion (PS1) of said front portion (PVM) of the mask (MB), and said second peripheral edge (BP2) is situated in an upper portion (PS2) of said translucid screen (ET).

3. Optical unit according to claim 1 or 2, **characterised in that** said first peripheral edge (BP1) comprises on the inner face (FI) thereof, two first protrusions (P1j) each equipped with a first coupling means (MC1), and said second arm (B2) comprises two third coupling means (MC3) engaging respectively with said first coupling means (MC1) to induce said rear immobilisation of the translucid screen (ET) with respect to said mask (MB).

4. Optical unit according to one of claims 1 to 3, **characterised in that** each first protrusion (P1j) comprises a first open housing having a concave shape and defining a first coupling means (MC1), and each third coupling means (MC3) is defined by a portion of said second arm (B2) which has a convex shape closely adapted to said concave shape to house it.

5. Optical unit according to one of claims 1 to 4, **characterised in that** said first peripheral edge (BP1) comprises on the outer face (FE) thereof, a second open housing defining said second coupling means (MC2), and said second peripheral edge (BP2) comprises a second protrusion defining said fourth coupling means (MC4) and housed in said second open housing (MC2).

6. Optical unit according to one of claims 1 to 4, **characterised in that** said second peripheral edge (BP2) comprises a second open housing defining said fourth coupling means (MC4), and said first peripheral edge (BP1) comprises on the outer face (FE) thereof, a second protrusion defining said second coupling means (MC2) and housed in said second open housing (MC4).

7. Optical unit according to one of claims 1 to 6, **characterised in that** said first peripheral edge (BP1) comprises on the inner face (FI) thereof, at least one third protrusion (P3k) having a first sloping face (FP1) oriented towards said inner face (FI), and said second arm (B2) comprises at least one fourth protrusion (P4k) equipped with a second sloping face (FP2) bearing on said first sloping face (FP1) to prevent a rotation of said translucid screen (ET) with respect to said mask (MB).

8. Optical unit according to claim 7, **characterised in that** said first peripheral edge (BP1) comprises on the inner face (FI) thereof, two third protrusions (P3k) each having a first sloping face (FP1) oriented towards said inner face (FI), and said second arm (B2) comprises two fourth protrusions (P4k) each equipped with a second sloping face (FP2) bearing on one of said first sloping faces (FP1) to prevent a rotation of said translucid screen (ET) with respect to said mask (MB).

9. Vehicle, **characterised in that** it comprises at least one optical unit (BO) according to one of the preceding claims.

10. Vehicle according to claim 9, **characterised in that** it is of the motor vehicle type.
